# EUROPEAN PATENT APPLICATION

(11) **EP 4 618 208 A1**
(43) Date of publication of application: **17.09.2025**
(21) Application number: 24200372.1
(22) Date of filing: 13.09.2024
(51) Int. Cl.: H01M 10/04, H01M 50/103, H01M 50/15, H01M 50/342, H01M 50/528, H01M 50/533

(54) **SECONDARY BATTERY, BATTERY MODULE INCLUDING THE SECONDARY BATTERY, BATTERY PACK INCLUDING THE BATTERY MODULE, AND VEHICLE INCLUDING THE BATTERY PACK**

(30) Priority: 15.03.2024 KR 20240036374
(71) Applicant: Samsung SDI Co., Ltd., Gyeonggi-do 17084 (KR)
(72) Inventor: KIM, Ji Hwan, 17084 Yongin-si (KR); YONG, Jun Sun, 17084 Yongin-si (KR); BAE, Kwang Soo, 17084 Yongin-si (KR); LEE, Jun Hyung, 17084 Yongin-si (KR); BAE, Chae Eun, 17084 Yongin-si (KR); ROH, Heyoung Cheoul, 17084 Yongin-si (KR)
(74) Representative: Marks & Clerk LLP

(57) **Abstract**

A secondary battery enabling a battery module and/or a battery pack to be compact compared to the related art, a battery module including the secondary battery, a battery pack including the battery module, and a vehicle including the battery pack. The secondary battery includes an electrode assembly including a first electrode plate, a separator, and a second electrode plate, a case configured to accommodate the electrode assembly and having a rectangular parallelepiped shape having a width and a height greater than the width, a cap plate coupled to the case, a first terminal on the cap plate and electrically connected to the first electrode plate, and a second terminal on the cap plate and electrically connected to the second electrode plate.

## Description

### BACKGROUND

### 1. Field

Embodiments of the present disclosure relate to a secondary battery, a battery module including the secondary battery, a battery pack including the battery module, and a vehicle including the battery pack.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

With increasing demand for high-capacity secondary batteries in a limited space, secondary batteries having a compact structure are required.

The above information disclosed in this Background section is for enhancement of understanding of the background of the present disclosure, and therefore, it may contain information that does not constitute related (or prior) art.

### SUMMARY

The present disclosure relates to various embodiments of a secondary battery enabling a battery module and/or a battery pack to be designed to be compact compared to the related art, a battery module including the secondary battery, a battery pack including the battery module, and a vehicle including the battery pack.

These and other aspects and features of the present disclosure will be described in or will be apparent from the following description of embodiments of the present disclosure.

A secondary battery according to an embodiment of the present disclosure includes an electrode assembly including a first electrode plate, a separator, and a second electrode plate, a case configured to accommodate the electrode assembly and having a rectangular parallelepiped shape having a width and a height greater than the width, a cap plate coupled to the case, a first terminal on the cap plate and electrically connected to the first electrode plate, and a second terminal on the cap plate and electrically connected to the second electrode plate.

In some embodiments, the height of the case may be approximately 1.5 times to approximately 2.5 times the width of the case.

In some embodiments, the first electrode plate may include a first electrode tab protruding from one side portion of the electrode assembly, and the first electrode tab may have a size corresponding to approximately 1/4 to approximately 1/2 of an overall height of the electrode assembly from an upper end of the electrode assembly.

In some embodiments, the secondary battery may further include a first current collector including a first vertical portion in contact with the first electrode tab and a first horizontal portion including an end connected to an upper end of the first vertical portion and another end connected to a lower portion of the first terminal, and the first vertical portion may have a size substantially corresponding to the size of the first electrode tab.

In some embodiments, the secondary battery may further include a first current collector including a first vertical portion in contact with the first electrode tab and a first horizontal portion including an end connected to an upper end of the first vertical portion and another end connected to a lower portion of the first terminal, and the first vertical portion may have a size corresponding to approximately 1/4 to approximately 1/2 of the overall height of the electrode assembly from the upper end of the electrode assembly.

In some embodiments, the second electrode plate may include a second electrode tab protruding from the opposite side portion of the electrode assembly, and the second electrode tab may have a size corresponding to approximately 1/4 to approximately 1/2 of the overall height of the electrode assembly from the upper end of the electrode assembly.

In some embodiments, the secondary battery may further include a second current collector including a second vertical portion in contact with the second electrode tab and a second horizontal portion including an end connected to an upper end of the second vertical portion and another end connected to a lower portion of the second terminal, and the second vertical portion may have a size substantially corresponding to the size of the second electrode tab.

In some embodiments, the secondary battery may further include a second current collector including a second vertical portion in contact with the second electrode tab and a second horizontal portion including an end connected to an upper end of the second vertical portion and another end connected to a lower portion of the second terminal, and the second vertical portion may have a size corresponding to approximately 1/4 to approximately 1/2 of the overall height of the electrode assembly from the upper end of the electrode assembly.

In some embodiments, the first electrode tab may be divided into plural parts and thus may include first electrode tab parts.

In some embodiments, the second electrode tab may be divided into plural parts and thus may include second electrode tab parts.

In some embodiments, the secondary battery may further include an insulating member configured to insulate the electrode assembly and the cap plate from each other.

In some embodiments, the secondary battery may further include a separating member configured to insulate the electrode assembly and the case from each other.

In some embodiments, the first electrode tab may be divided into plural parts and thus may include first electrode tab parts, and the first vertical portion may have a size covering all of the first electrode tab parts of the first electrode tab.

In some embodiments, the second electrode tab may be divided into plural parts and thus may include second electrode tab parts and the second vertical portion may have a size covering all of the second electrode tab parts of the second electrode tab.

In some embodiments, the first electrode tab parts of the first electrode tab may be spaced apart from each other in the height direction of the case, and a region between the first electrode tab parts of the first electrode tab may be bonded to a side surface of the electrode assembly.

In some embodiments, the second electrode tab parts of the second electrode tab may be spaced apart from each other in the height direction of the case, and a region between the second electrode tab parts of the second electrode tab may be bonded to a side surface of the electrode assembly.

In some embodiments, the cap plate may include a vent portion.

A battery module according to an embodiment of the present disclosure includes (a plurality of) secondary batteries each configured as described above, a connection tab configured to connect the secondary batteries to each other, and a casing configured to accommodate the secondary batteries in which the secondary batteries are arranged in one layer in the height direction.

A battery pack according to an embodiment of the present disclosure includes (a plurality of) battery modules each configured as described above, a bus bar configured to connect the battery modules to each other, and a housing configured to accommodate the battery modules in which the battery modules are arranged in one layer in the height direction.

A vehicle according to an embodiment of the present disclosure includes a battery pack configured as described above and a vehicle body in which the battery pack is mounted.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view of a secondary battery according to an embodiment of the present disclosure;
FIG. 2 is a cross-sectional view of the secondary battery, taken along the line II-II in FIG. 1, according to the embodiment of the present disclosure;
FIG. 3 is a schematic view of a battery module according to an embodiment of the present disclosure;
FIG. 4 is a schematic view of a battery pack according to an embodiment of the present disclosure; and
FIG. 5 is a schematic view of a vehicle according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

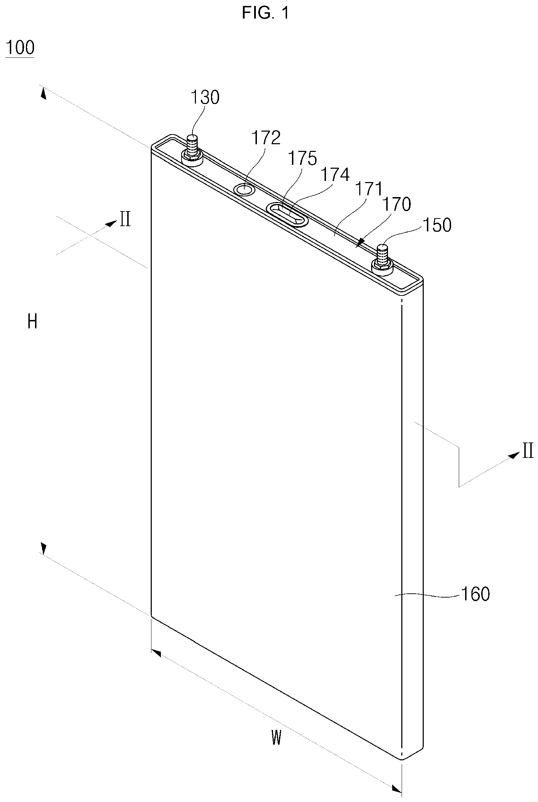

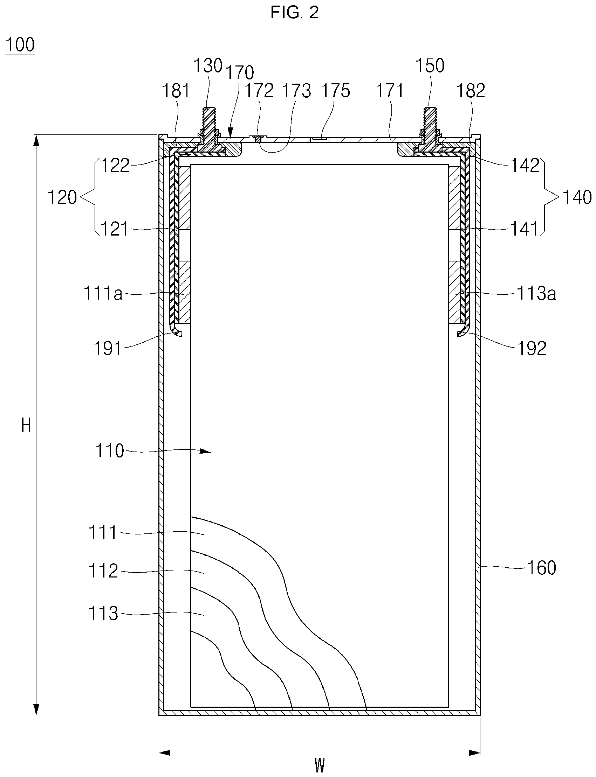

FIG. 1 is a perspective view of a secondary battery 100 according to an embodiment of the present disclosure, and FIG. 2 is a cross-sectional view of the secondary battery 100, taken along the line II-II in FIG. 1, according to the embodiment of the present disclosure.

As shown in FIGs. 1 and 2, the secondary battery 100 may include an electrode assembly 110, a first current collector 120, a first terminal 130, a second current collector 140, a second terminal 150, a case 160, and a cap assembly 170.

An electrode assembly 110 may be formed by winding or stacking a stack of a first electrode plate 111, a separator 112, and a second electrode plate 113, which are formed as thin plates or films. When the electrode assembly 110 is a wound stack, a winding axis may be parallel to the width direction of the case 160. In other embodiments, the electrode assembly 110 may be a stack type rather than a winding type, and the shape of the electrode assembly 110 is not limited in the present disclosure. In addition, the electrode assembly 110 may be a Z-stack electrode assembly in which the first electrode plate 111 and the second electrode plate 113 are inserted into both sides of a separator 112, which is then bent into a Z-stack. In addition, one or more electrode assemblies 110 may be stacked such that long sides of the electrode assemblies 110 are adjacent to each other and accommodated in the case 160, and the number of electrode assemblies 110 in the case is not limited in the present disclosure. The first electrode plate 111 of the electrode assembly 110 may act as a negative electrode, and the second electrode plate 113 may act as a positive electrode. Of course, the reverse is also possible.

The first electrode plate 111 may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) 111a that is a region to which the first electrode active material is not applied. The first electrode tab 111a may act as a current flow path between the first electrode plate 111 and the first current collector 120. In some embodiments, when the first electrode plate 111 is manufactured, the first electrode tab 111a may be formed by being cut in advance to protrude to one side of the electrode assembly 110, or the first electrode tab 111a may protrude to one side of the electrode assembly 110 more than (e.g., farther than or beyond) the separator 112 without being separately cut.

The second electrode plate 113 may be formed by applying a second electrode active material, such as a transition metal oxide, on a second electrode current collector formed of a metal foil, such as aluminum or an aluminum alloy. The second electrode plate 113 may include a second electrode tab (e.g., a second uncoated portion) 113a that is a region to which the second electrode active material is not applied. The second electrode tab 113a may act as a current flow path between the second electrode plate 113 and the second current collector 140. In some embodiments, the second electrode tab 113a may be formed by being cut in advance to protrude to the other side (e.g., the opposite side) of the electrode assembly 110 when the second electrode plate 113 is manufactured, or the second electrode plate 113 may protrude to the other side of the electrode assembly 110 more than (e.g., farther than or beyond) the separator 112 without being separately cut.

In some embodiments, the first electrode tab 111a may be located on the left side of the electrode assembly 110, and the second electrode tab 113a may be located on the right side of the electrode assembly 110. In other embodiments, the first electrode tab 111a and the second electrode tab 113a may be located on one side of the electrode assembly 110 in the same direction. Here, for convenience of description, the left and right sides are defined according to the secondary battery 100 as oriented in FIG. 2, and the positions thereof may change when the secondary battery 100 is rotated left and right or up and down.

The first electrode tab 111a of the first electrode plate 111 and the second electrode tab 113a of the second electrode plate 113 may be respectively positioned at both ends (e.g., opposite ends) of the electrode assembly 110. In some embodiments, the electrode assembly 110 may be accommodated in the case 160 along with an electrolyte. In addition, in the electrode assembly 110, the first current collector 120 and the second current collector 140 may be welded and connected to the first electrode tab 111a of the first electrode plate 111 and the second electrode tab 113a of the second electrode plate 113 exposed on both sides, respectively, to then be positioned thereat, respectively.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

The case 160 may form the overall outer appearance of the secondary battery 100 and may be made of a conductive metal, such as aluminum, aluminum alloy, or nickel-plated steel. In addition, the case 160 may provide a space in which the electrode assembly 110 is accommodated.

The cap assembly 170 may include a cap plate 171 covering an opening in the case 160, and the case 160 and the cap plate 171 may be made of a conductive material. The first and second electrode terminals 130 and 150 electrically connected to the first electrode plate 111 and the second electrode plate 113, respectively, may be installed to penetrate (or extend through) the cap plate 171 and protrude outwardly therethrough.

In addition, outer peripheral surfaces (e.g., circumferential surfaces) of upper pillars of the first and second electrode terminals 130 and 150 protruding outwardly from the cap plate 171 may be threaded and may be fixed to the cap plate 171 by utilizing nuts.

However, the present disclosure is not limited thereto, and the first and second electrode terminals 130 and 150 may have a rivet structure and may be riveted or welded to the cap plate 171.

In addition, the cap plate 171 may be made of a thin plate and may be coupled to the opening in the case 160, and an electrolyte injection port 173 into which a sealing stopper 172 may be installed may be located (e.g., formed) in the cap plate 171, and a vent portion 175 having a notch 174 may be installed.

The first and second electrode terminals 130 and 150 may be electrically connected to current collectors including first and second current collectors 120 and 140 by being bonded or coupled (e.g., by welding) to the first uncoated portion 111a and the second electrode uncoated portion 113a, respectively.

For example, the first and second electrode terminals 130 and 150 may be coupled by welding to the first and second electrode current collectors 120 and 140, respectively. However, the present disclosure is not limited thereto, and the first and second electrode terminals 130 and 150 and the first and second electrode current collectors 120 and 140 may be integrally formed in one or more embodiments.

In addition, an insulation member may be installed between the electrode assembly 110 and the cap plate 171. The insulation member may include first and second lower insulation members 181 and 182, and each of the first and second lower insulation members 181 and 182 may also have a portion located between the electrode assembly 110 and the cap plate 171.

In addition, according to one or more embodiments of the present disclosure, one end of a separation member may face one side of the electrode assembly 110 and may be installed between the insulation member and the first or second electrode terminals 130 and 150.

In one or more embodiments, the separation member may include first and second separation members 191 and 192.

In such an embodiment, first ends of the first and second separation members 191 and 192 installed to face one side of the electrode assembly 110 may be respectively installed between the first and second lower insulation members 181 and 182 and the first and second electrode terminals 130 and 150.

Accordingly, the first and second electrode terminals 130 and 150, which may be coupled by welding to the first and second electrode current collectors 120 and 140, may be coupled to first ends of the first and second lower insulation members 181 and 182 and the first and second separation members 191 and 192.

The electrode assembly 110, the first and second current collectors 120 and 140, and the case 160 may be insulated from each other by first and second separating members 191 and 192.

In the secondary battery 100 according to the present disclosure, the case 160 may have a prismatic shape, e.g., a substantially rectangular parallelepiped shape. The height H of the case 160 may be greater than the width W of the case 160. For example, the height H of the case 160 may be 1.5 times to 2.5 times the width W of the case 160. In one or more embodiments, the height H of the case 160 may be approximately 200 mm or more.

The first electrode tab 111a may have a size corresponding to approximately 1/4 to approximately 1/2 of the overall height of the electrode assembly 110 from the upper end of the electrode assembly 110 and may protrude from one side portion of the electrode assembly 110. Because the first electrode tab 111a has a size of approximately 1/4 or more of the overall height of the electrode assembly 110, sufficient current flow may be achieved. Because the first electrode tab 111a has a size of approximately 1/2 or less of the overall height of the electrode assembly 110, unnecessary increase in size of the first electrode tab 111a may be prevented, and thus resultant increase in weight and cost thereof and reduction in internal space may be prevented.

The first electrode tab 111a may be divided into a plurality of parts. Although the first electrode tab 111a is illustrated in FIG. 2 as being divided into two parts vertically spaced apart from each other (e.g., by a gap), in one or more embodiments the first electrode tab 111a may be divided into three or more parts. In one or more embodiments, bonding to the side surface of the electrode assembly 110 may be performed in a region between the divided parts of the first electrode tab 111a.

The second electrode tab 113a may have a size corresponding to approximately 1/4 to approximately 1/2 of the overall height of the electrode assembly 110 from the upper end of the electrode assembly 110 and may protrude from a side portion of the electrode assembly 110 opposite to the first electrode tab 111a. Because the second electrode tab 113a has a size of approximately 1/4 or more of the overall height of the electrode assembly 110, sufficient current flow may be achieved. Because the second electrode tab 113a has a size of approximately 1/2 or less of the overall height of the electrode assembly 110, unnecessary increase in size of the second electrode tab 113a may be prevented, and thus resultant increase in weight and cost thereof and reduction in internal space may be prevented.

The second electrode tab 113a may be divided into a plurality of parts. Although the second electrode tab 113a is illustrated in FIG. 2 as being divided into two parts vertically spaced apart from each other (e.g., by a gap), the second electrode tab 113a may be divided into three or more parts. In one or more embodiments, bonding to the side surface of the electrode assembly 110 may be performed in a region between the divided parts of the second electrode tab 113a.

The first current collector 120 may include a first vertical portion 121 and a first horizontal portion 122. The terms "vertical portion" and "horizontal portion" are used herein to facilitate description of the disclosure because the vertical portion and the horizontal portion are oriented substantially vertically and horizontally, respectively, based on the orientation of the secondary battery 100 in FIG. 2. It should be understood that such terms do not denote absolute orientation. If the secondary battery 100 is rotated by 90° from the upright state shown in FIG. 2 to a horizontal state, the first vertical portion 121 may be oriented horizontally (or substantially horizontally), and the first horizontal portion 122 may be oriented vertically (or substantially vertically).

The first vertical portion 121 may be a portion in contact with the first electrode tab 111a and may have a size corresponding (or substantially corresponding) to the size of the first electrode tab 111a. In an embodiment in which the first electrode tab 111a is divided into a plurality of parts, the first vertical portion 121 may have a size configured to cover all of the plurality of parts of the first electrode tab 111a. In one or more embodiments, the first vertical portion 121 may have a size corresponding to approximately 1/4 to approximately 1/2 of the overall height of the electrode assembly 110 from the upper end of the electrode assembly 110. Because the first vertical portion 121 has a size of approximately 1/4 or more of the overall height of the electrode assembly 110, sufficient current flow may be achieved. Because the first vertical portion 121 has a size of approximately 1/2 or less of the overall height of the electrode assembly 110, unnecessary increase in size of the first vertical portion 121 may be prevented, and thus resultant increase in weight and cost thereof and reduction in internal space may be prevented.

The first horizontal portion 122 may be connected at one end thereof to the upper end of the first vertical portion 121 and may be connected at the other end thereof to the lower portion of the first terminal 130.

The first vertical portion 121 and the first horizontal portion 122 may be integral with each other (i.e., monolithic).

The second current collector 140 may include a second vertical portion 141 and a second horizontal portion 142.

The second vertical portion 141 may be a portion in contact with the second electrode tab 113a and may have a size corresponding (or substantially corresponding) to the size of the second electrode tab 113a. In an embodiment in which the second electrode tab 113a is divided into a plurality of parts, the second vertical portion 141 may have a size configured to cover all of the plurality of parts of the second electrode tab 113a. In one or more embodiments, the second vertical portion 141 may have a size corresponding to approximately 1/4 to approximately 1/2 of the overall height of the electrode assembly 110 from the upper end of the electrode assembly 110. Because the second vertical portion 141 has a size of approximately 1/4 or more of the overall height of the electrode assembly 110, sufficient current flow may be achieved. Because the second vertical portion 141 has a size of approximately 1/2 or less of the overall height of the electrode assembly 110, unnecessary increase in size of the second vertical portion 141 may be prevented, and thus resultant increase in weight and cost thereof and reduction in internal space may be prevented.

The second horizontal portion 142 may be connected at one end thereof to the upper end of the second vertical portion 141 and may be connected at the other end thereof to the lower portion of the second terminal 150.

The second vertical portion 141 and the second horizontal portion 142 may be integral with each other (i.e., monolithic).

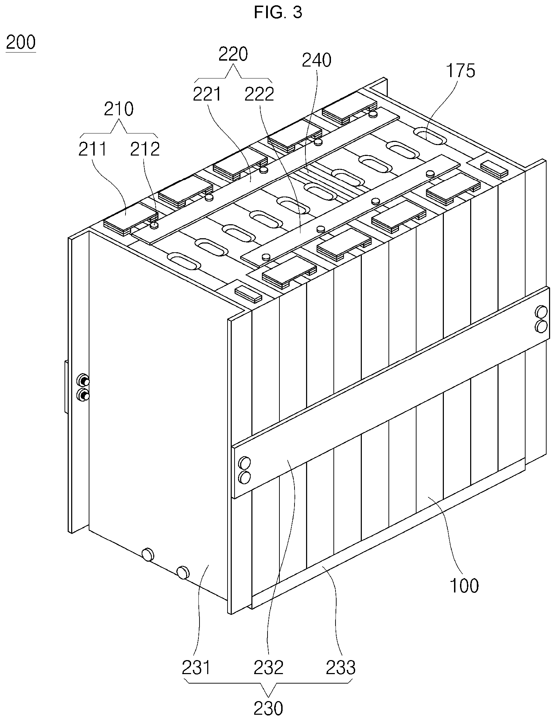

FIG. 3 is a schematic view of a battery module 200 according to an embodiment of the present disclosure.

Referring to FIG. 3, the battery module 200 according to one or more embodiments of the present disclosure includes a plurality of battery cells 100 arranged in one direction, a connection tab 210 connecting a battery cell 100 to an adjacent battery cell 100, and a protection circuit module 220 having one end connected to the connection tab 210. The protection circuit module 220 may include a battery management system (BMS). Further, the connection tab 210 may include a body portion 211 in contact with the electrode units between the adjacent battery cells 100 and an extension portion 212 extending from the body portion 211 and connected to the protection circuit module 220. The connection tab 210 may be, for example, a bus bar.

The battery cell 100 may be the secondary battery 100 described above.

The plurality of battery cells 100 may be arranged in (e.g., may be stacked in) one direction so that the wide surfaces of the battery cells 100 face each other, and the plurality of battery cells 100 may be fixed by the casings 230. The casings 230 may include a pair of end plates 231 facing the wide surfaces of the battery cell 100 and a side plate 232 and a bottom plate 233 connecting the pair of end plates 231 to each other. The side plate 232 may support side surfaces of the battery cells 100, and the bottom plate 233 may support bottom surfaces of the battery cells 100. In addition, the pair of end plates 231, the side plate 232 and the bottom plate 233 may be connected by bolts and/or any other suitable fastening members and methods known to those of ordinary skill in the art.

The protection circuit module 220 may have electronic components and protection circuits mounted thereon and may be electrically connected to connection tabs 210, to be described in more detail later. The protection circuit module 220 includes a first protection circuit module 221 and a second protection circuit module 222 extending along the direction in which the plurality of battery cells 100 are arranged in different locations. The first protection circuit module 221 and the second protection circuit module 222 may be spaced from each other at a suitable interval (e.g., a predetermined interval) and arranged parallel to each other to be electrically connected to adjacent connection tabs 210, respectively. For example, the first protection circuit module 221 extends on one side of the upper portion of the plurality of battery cells 100 along the direction in which the plurality of battery cells 100 are arranged, and the second protection circuit module 222 extends to the other upper side of the plurality of battery cells 100 along the direction in which the plurality of battery cells 100 are arranged. The second protection circuit module 222 may be spaced from the first protection circuit module 221 at a suitable interval (e.g., a predetermined interval) with the vents 175 interposed therebetween but may be disposed parallel to the first protection circuit module 221. As such, the two protection circuit modules 221, 222 are spaced from each other side-by-side along the direction in which the plurality of battery cells 100 are arranged, thereby reducing or minimizing the area of the printed circuit board (PCB) constituting the protection circuit module 220. By separately configuring the protection circuit module 220 into two protection circuit modules 221 and 222, unnecessary PCM area can be reduced or minimized. In addition, the first protection circuit module 221 and the second protection circuit module 222 may be connected to each other by a conductive connection member 240. One side of the conductive connection member 240 is connected to the first protection circuit module 221, and the other side thereof is connected to the second protection circuit module 222 so that the two protection circuit modules 221 and 222 can be electrically connected with each other.

The connection may be performed by any one of soldering, resistance welding, laser welding, projection welding and/or any other suitable connection methods known to those of ordinary skill in the art.

In addition, the connection member 240 may be, for example, an electric wire. In addition, the connection member 240 may be made of a material having elasticity or flexibility. By the connecting member 240, it may be possible to check and manage whether the voltage, temperature, and/or current of the plurality of battery cells 100 are normal. For example, the information received by the first protection circuit module 221 from connection tabs 210 adjacent to the first protection circuit module 221, such as voltage, current, and/or temperature, and the information received from connection tabs 210 adjacent to the second protection circuit module 222, such as voltage, current, and/or temperature, may be integrated and managed by the protection circuit module 220 through the connection member 240.

In addition, when the battery cell 100 swells, shocks may be absorbed by the elasticity or flexibility of the connection member 240, thereby preventing the first and second protection circuit modules 221 and 222 from being damaged.

In addition, the shape and structure of the connection member 240 is not limited to the shape and structure shown in FIG. 3.

As described above, because the protection circuit module 220 is provided as the first and second protection circuit modules 221 and 222, the area of the PCB constituting the protection circuit module 220 can be reduced or minimized, and the space inside the battery module 200 can be secured, which improves work efficiency by facilitating a fastening work for connecting the connection tab 210 and the protection circuit module 220 and repair work if (or when) an abnormality is detected in the battery module 200.

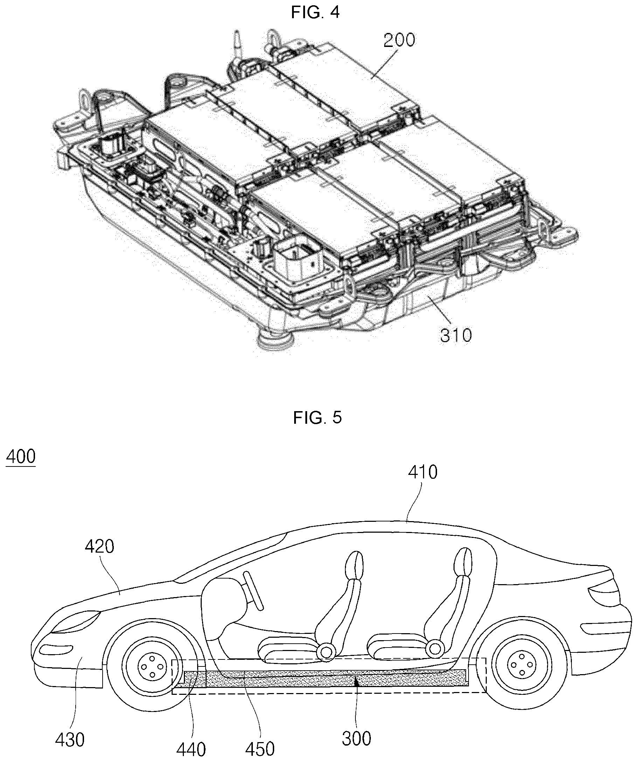

FIG. 4 is a schematic view of a battery pack 300 according to an embodiment of the present disclosure.

The battery pack 300 may include a plurality of battery modules 200 and a housing 310 configured to accommodate the plurality of battery modules 200. In one or more embodiments, the housing 310 may include an upper housing and a lower housing that are coupled to each other in directions facing each other with the plurality of battery modules 200 therebetween. Only the lower housing (among the upper housing and the lower housing) is shown in FIG. 4, with the upper housing removed to reveal the plurality of battery modules 200. The plurality of battery modules 200 may be electrically connected to each other using bus bars. The plurality of battery modules 200 may be electrically connected to each other in series, in parallel, or in a combination of series and parallel, so that desired electrical output may be obtained.

In the above-described battery module 200 and/or battery pack 300, a battery cell is formed such that the width of a case is relatively large and the height of the case is relatively small, and thus the battery cells are stacked vertically in two or more layers.

According to one or more embodiments of the present disclosure, because the height H of the case 160 of the battery cell (secondary battery) 100 is greater than, e.g., about (approximately) twice as great as, that in the related art, the battery cells 100 may be mounted in one layer in the battery module 200 and/or the battery pack 300 without being stacked vertically (i.e., in the direction of the height H). Thus, a conventional vertical connection structure, vertical coupling structure, or vertical support structure required in the related art for the vertically stacked battery cells may be eliminated, and thus the battery module 200 and/or the battery pack 300 may be more compact than the related art battery module and/or the related art battery pack.

FIG. 5 is a schematic view of a vehicle 400 according to an embodiment of the present disclosure.

The vehicle 400 may include a vehicle body 410 and various parts coupled to the vehicle body 410, such as a hood 420 located at the front portion of the vehicle and fenders 430 located at the front and rear portions of the vehicle.

The vehicle 400 may further include a vehicle floor as one of the vehicle body parts, which includes a battery pack frame 440 accommodating the battery pack 300, and a battery pack cover 450.

As is apparent from the above description, according to the present disclosure, a case of a secondary battery (battery cell) may be formed such that the height thereof is greater than the width thereof. Thus, in an embodiment in which such a battery cell is used to manufacture a battery module and/or a battery pack, the battery cells may be mounted in one layer without being stacked vertically. Thus, a conventional vertical connection structure, vertical coupling structure, or vertical support structure required for vertically stacked battery cells may be eliminated, and thus the battery module and/or the battery pack may be more compact than the related art battery module and/or the related art battery pack.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

**1.** A secondary battery comprising:
an electrode assembly comprising a first electrode plate, a separator, and a second electrode plate;
a case configured to accommodate the electrode assembly, the case having a rectangular parallelepiped shape having a width and a height greater than the width;
a cap plate coupled to the case;
a first terminal on the cap plate and electrically connected to the first electrode plate; and
a second terminal on the cap plate and electrically connected to the second electrode plate.

**2.** The secondary battery as claimed in claim 1, wherein the height of the case is approximately 1.5 times to approximately 2.5 times the width of the case.

**3.** The secondary battery as claimed in claim 1 or claim 2, wherein the first electrode plate comprises a first electrode tab protruding from one side portion of the electrode assembly, and
wherein the first electrode tab has a size corresponding to approximately 1/4 to approximately 1/2 of an overall height of the electrode assembly from an upper end of the electrode assembly.

**4.** The secondary battery as claimed in claim 3, further comprising a first current collector comprising a first vertical portion in contact with the first electrode tab and a first horizontal portion comprising an end connected to an upper end of the first vertical portion and another end connected to a lower portion of the first terminal,
wherein the first vertical portion has a size substantially corresponding to a size of the first electrode tab, and optionally wherein the first vertical portion has a size corresponding to approximately 1/4 to approximately 1/2 of the overall height of the electrode assembly from the upper end of the electrode assembly.

**5.** The secondary battery as claimed in claim 3 or claim 4, wherein the first electrode tab comprises a plurality of first electrode tab parts, and optionally wherein:
the plurality of first electrode tab parts of the first electrode tab are spaced apart from each other in a height direction of the case, and a region between the plurality of first electrode tab parts of the first electrode tab is bonded to a side surface of the electrode assembly.

**6.** The secondary battery as claimed in claim 3, claim 4 or claim 5, wherein the second electrode plate comprises a second electrode tab protruding from an opposite side portion of the electrode assembly, and
wherein the second electrode tab has a size corresponding to approximately 1/4 to approximately 1/2 of the overall height of the electrode assembly from the upper end of the electrode assembly.

**7.** The secondary battery as claimed in claim 6, further comprising a second current collector comprising a second vertical portion in contact with the second electrode tab and a second horizontal portion comprising an end connected to an upper end of the second vertical portion and another end connected to a lower portion of the second terminal,
wherein the second vertical portion has a size substantially corresponding to a size of the second electrode tab, optionally wherein the second vertical portion has a size corresponding to approximately 1/4 to approximately 1/2 of the overall height of the electrode assembly from the upper end of the electrode assembly.

**8.** The secondary battery as claimed in claim 6 or claim 7, wherein the second electrode tab comprises a plurality of second electrode tab parts, and optionally wherein:
the plurality of second electrode tab parts of the second electrode tab are spaced apart from each other in a height direction of the case, and a region between the plurality of second electrode tab parts of the second electrode tab is bonded to a side surface of the electrode assembly..

**9.** The secondary battery as claimed in any one of the preceding claims, further comprising an insulating member configured to insulate the electrode assembly and the cap plate from each other.

**10.** The secondary battery as claimed in any one of the preceding claims, further comprising a separating member configured to insulate the electrode assembly and the case from each other.

**11.** The secondary battery as claimed in any one of the preceding claims, when dependent upon claim 4, wherein the first electrode tab comprises a plurality of first electrode tab parts, and
wherein the first vertical portion has a size covering all of the plurality of first electrode tab parts of the first electrode tab.

**11.** The secondary battery as claimed in any one of the preceding claims, when dependent upon claim 7, wherein the second electrode tab comprises a plurality of second electrode tab parts, and
wherein the second vertical portion has a size covering all of the plurality of second electrode tab parts of the second electrode tab.

**12.** The secondary battery as claimed in any one of the preceding claims, wherein the cap plate comprises a vent portion.

**13.** A battery module comprising:
a plurality of secondary batteries, each of the plurality of secondary batteries being the secondary battery as claimed in any one of the preceding claims;
a connection tab configured to connect the plurality of secondary batteries to each other; and
a casing configured to accommodate the plurality of secondary batteries,
wherein the plurality of secondary batteries is arranged in one layer in a height direction.

**14.** A battery pack comprising:
a plurality of battery modules, each of the plurality of battery modules being the battery module as claimed in claim 13;
a bus bar configured to connect the plurality of battery modules to each other; and
a housing configured to accommodate the plurality of battery modules,
wherein the plurality of battery modules is arranged in one layer in the height direction.

**15.** A vehicle comprising:
the battery pack as claimed in claim 14; and
a vehicle body configured to allow the battery pack to be mounted therein.

## Amended claims

### Amended claims in accordance with Rule 137(2) EPC.

1. A secondary battery (100) comprising:
an electrode assembly (110) comprising a first electrode plate (111), a separator (112), and a second electrode plate (113);
a case (160) configured to accommodate the electrode assembly (110), the case (160) having a rectangular parallelepiped shape having a width (W) and a height (H) greater than the width (W);
a cap plate (171) coupled to the case (160);
a first terminal (130) on the cap plate (171) and electrically connected to the first electrode plate (111);
a second terminal (150) on the cap plate (171) and electrically connected to the second electrode plate (113);
wherein the first electrode plate (111) comprises a first electrode tab (111a) protruding from one side portion of the electrode assembly (110), and
wherein the first electrode tab (111a) has a size corresponding to approximately 1/4 to approximately 1/2 of an overall height of the electrode assembly (110) from an upper end of the electrode assembly (110).

2. The secondary battery (100) as claimed in claim 1, wherein the height (H) of the case (160) is approximately 1.5 times to approximately 2.5 times the width (W) of the case (160).

3. The secondary battery (100) as claimed in claim 1, further comprising a first current collector (120) comprising a first vertical portion (121) in contact with the first electrode tab (111a) and a first horizontal portion (122) comprising an end connected to an upper end of the first vertical portion (121) and another end connected to a lower portion of the first terminal (130),
wherein the first vertical portion (121) has a size substantially corresponding to a size of the first electrode tab (111a), and optionally wherein the first vertical portion (121) has a size corresponding to approximately 1/4 to approximately 1/2 of the overall height of the electrode assembly (110) from the upper end of the electrode assembly (110).

4. The secondary battery (100) as claimed in claim 1 or claim 3, wherein the first electrode tab (111a) comprises a plurality of first electrode tab parts, and optionally wherein:
the plurality of first electrode tab parts of the first electrode tab (111a) are spaced apart from each other in a height direction of the case (160), and a region between the plurality of first electrode tab parts of the first electrode tab (111a) is bonded to a side surface of the electrode assembly (110).

5. The secondary battery (100) as claimed in claim 1, claim 3 or claim 4, wherein the second electrode plate (113) comprises a second electrode tab (113a) protruding from an opposite side portion of the electrode assembly (110), and
wherein the second electrode tab (113a) has a size corresponding to approximately 1/4 to approximately 1/2 of the overall height of the electrode assembly (110) from the upper end of the electrode assembly (110).

6. The secondary battery (100) as claimed in claim 5, further comprising a second current collector (140) comprising a second vertical portion (141) in contact with the second electrode tab (113a) and a second horizontal portion (142) comprising an end connected to an upper end of the second vertical portion (141) and another end connected to a lower portion of the second terminal (150),
wherein the second vertical portion (141) has a size substantially corresponding to a size of the second electrode tab (113a), optionally wherein the second vertical portion (141) has a size corresponding to approximately 1/4 to approximately 1/2 of the overall height of the electrode assembly (110) from the upper end of the electrode assembly (110).

7. The secondary battery (100) as claimed in claim 5 or claim 6, wherein the second electrode tab (113a) comprises a plurality of second electrode tab parts, and optionally wherein:
the plurality of second electrode tab parts of the second electrode tab (113a) are spaced apart from each other in a height direction of the case (160), and a region between the plurality of second electrode tab parts of the second electrode tab (113a) is bonded to a side surface of the electrode assembly (110).

8. The secondary battery (100) as claimed in any one of the preceding claims, further comprising an insulating member (181, 182) configured to insulate the electrode assembly (110) and the cap plate (171) from each other.

9. The secondary battery (100) as claimed in any one of the preceding claims, further comprising a separating member (191, 192) configured to insulate the electrode assembly (110) and the case (160) from each other.

10. The secondary battery (100) as claimed in any one of the preceding claims, when dependent upon claim 3, wherein the first electrode tab (111a) comprises a plurality of first electrode tab parts, and
wherein the first vertical portion (121) has a size covering all of the plurality of first electrode tab parts of the first electrode tab (111a).

11. The secondary battery (100) as claimed in any one of the preceding claims, when dependent upon claim 6, wherein the second electrode tab (113a) comprises a plurality of second electrode tab parts, and
wherein the second vertical portion (141) has a size covering all of the plurality of second electrode tab parts of the second electrode tab (113a).

12. The secondary battery (100) as claimed in any one of the preceding claims, wherein the cap plate (171) comprises a vent portion (175).

13. A battery module (200) comprising:
a plurality of secondary batteries (100), each of the plurality of secondary batteries (100) being the secondary battery (100) as claimed in any one of the preceding claims;
a connection tab (210) configured to connect the plurality of secondary batteries (100) to each other; and
a casing (230) configured to accommodate the plurality of secondary batteries (100),
wherein the plurality of secondary batteries (100) is arranged in one layer in a height direction.

14. A battery pack (300) comprising:
a plurality of battery modules (200), each of the plurality of battery modules (200) being the battery module (200) as claimed in claim 13;
a bus bar configured to connect the plurality of battery modules (200) to each other; and
a housing (310) configured to accommodate the plurality of battery modules (200),
wherein the plurality of battery modules (200) is arranged in one layer in the height direction.

15. A vehicle (400) comprising:
the battery pack (300) as claimed in claim 14; and
a vehicle body (410) configured to allow the battery pack (300) to be mounted therein.
